# EUROPEAN PATENT SPECIFICATION

(11) **EP 1 086 621 B1**
(45) Date of publication and mention of the grant of the patent: **08.09.2004**
(21) Application number: 00308445.6
(22) Date of filing: 27.09.2000
(51) Int. Cl.: A01G 9/10

(54) **Raising seedling device and method**
Vorrichtung und Verfahren zum Züchten von Sämlingen
Dispositif et méthode pour la culture de jeunes plantes

(30) Priority: 27.09.1999 JP 27224999; 25.11.1999 JP 33466399; 25.11.1999 JP 33466499; 28.06.2000 JP 2000194462
(43) Date of publication of application: 28.03.2001
(73) Proprietor: Akira Sakanaka, Naga-gun, Wakayama (JP); Susumu Sakanaka, Naga-gun, Wakayama (JP)
(72) Inventor: Sakanaka, Toshio, Naga-gun, Wakayama (JP)
(74) Representative: Hillier, Peter

(56) References cited:
- EP-A- 0 422 704
- WO-A-96/03857
- WO-A-98/23143
- FR-A- 2 544 958
- US-A- 3 919 163
- US-A- 4 389 814
- US-A- 4 623 066
- US-A- 5 274 953

## Description

### BACKGROUND OF THE INVENTION

### Field of the Invention

The present invention relates to a raising seedling device for use in raising seedlings including fruit vegetable seedlings, leafy vegetable seedlings, flowering grasses and saplings and to a raising seedling method thereof.

### Description of the Prior Art

In general, the seedlings are often raised in small pots or synthetic resin pots that are generally called poly-pots. Potting compost or soil is filled in the small pots or the poly-pots, and seeds are sowed in or young plants are planted in the potting compost or soil in the pots.

Some of the plants raised in the poly-pots are sold as planted in the poly-pots and the others are taken out from the poly-pots, for transplantation of them.

As mentioned above, the fruit vegetable seedlings, leafy vegetable seedlings, flowering grasses and saplings raised in the small pots or the poly-pots are often taken out therefrom, for the transplantation of them.

The conventional raising of seedling in the poly-pot has the disadvantage that the plants raised in the poly-pots in particular are prevented from spreading their roots out of the poly-pots and, as a result of this, they spread their main roots around the periphery of inner walls of the poly-pots during the raising of the seedling. If the seedlings are transplanted as their main roots are spread in the poly-pot, the plants, such as the fruit vegetable seedling, are underdeveloped. To prevent this, the main roots are cut before the transplantation, however, since the main roots are damaged by the cutting, the bad taking root is easily yielded. If it takes a lot of troubles such as cutting their main root when the plants are taken out from the small pots or the poly-pots for transplantation purposes, a meaning of using the poly-pot to raise the seedlings are reduced.

Further, when the plant is raised in the poly-pot, moisture evaporated from the soil in the poly-pot of non-porous causes dew condensation on the inner wall of the poly-pot. The dew condensation makes a gap between the potting compost or soil and the inner wall of the poly-pot and water is kept within the gap. When the roots fruit vegetable seedlings, leafy vegetable seedlings, flowering grasses and saplings spread their roots to the inner wall of the poly-pot, a growing point of their roots can easily watered. Thereby, the only roots reached to the inner wall of the poly-pot are grew. Due to this, the conventional raising of seedling in the poly-pot suffers from the disadvantage that the phenomenon that the main root spreads around the inner wall of the poly-pot (a so-called "around-the-pot" of the main root) is produced, so that feeder roots or fine roots are reduced in number. As a result of this, a portion of the seedling above ground, such as a stem, leaves, or flowers, are needlessly grew and become long and narrow. Thus, the fruit vegetable seedlings, leafy vegetable seedlings, flowering grasses and saplings, after transplanted, are underdeveloped and the bad taking root is easily yielded.

To minimize the disadvantages mentioned above, the inventor previously proposed the improvement in Japanese Patent Application No. Hei 11(1999)-272249.

In the previously proposed invention, a plurality of pots in the interior of which potting compost or soil is to be filled are formed in a tray. Each of the pots is provided with (i) air/water flow portions formed by slits which are formed in a periphery wall and a bottom wall of the pot and (ii) legs projected downwardly from a marginal portion around the periphery of the bottom to define a space between the bottom of the pot and an installation surface on which the tray is placed.

This previous proposal has the disadvantage that the device has a complicated structure in that the legs are projected downwardly from the marginal portion around the periphery of the bottom of each of the pots. As a result of this, the mold for forming that device is increased in cost and thus manufacturing costs is increased.

Also, the previous proposal suffers from the disadvantage that the downwardly projected legs make sunless places under the bottoms of the pots, so that the roots facing the slits easily extend down to the places under the bottoms of the pots.

Further, the trays are often piled for transportation and storage purposes. When the trays are piled, they become bulky due to the legs projected downwardly from the marginal portion around the periphery of the bottom of each of the pots, thus presenting the problem of causing reduced storage efficiency and increased transport costs.

The conventional type of poly-pots used for raising of seedlings are produced by melting e.g. a synthetic resin and then molding the melt synthetic resin into a pot-like form. After the fruit vegetable seedlings, leafy vegetable seedlings, flowering grasses and saplings are taken out from the poly-pots, the used pots must be collected or recovered or handled as industrial wastes. Thus, the conventional poly-pots suffer from the disadvantage that it takes a lot of trouble with the collection or recovery of the used poly-pots and also involves in costs for the transportation and incineration thereof. In addition, it also suffers from the disadvantage that when the used poly-pots are incinerated, harmful substances, such as dioxins, can be produced to cause an environmental pollution.

To solve the problem, the tray and the at least one pot of the present invention may be formed of a biodegradable plastic.

In consideration of the disadvantages and problems mentioned above, the present invention has been proposed. It is the object of the present invention to provide a raising seedling device and method that can prevent the around-the-pot of the main roots of the seedlings to produce the fruit vegetable seedlings, leafy vegetable seedlings, flowering grasses and saplings having fine roots more than the main roots and being excellent in taking roots at low costs and with ease without causing reduced storage efficiency and without increased transport costs.

WO-A-9823143 discloses a raising seedling device comprising a tray and at least one pot, formed in the tray, for filling compost or soil in it, the at least one pot including a periphery wall having a bottom wall at one end and an opening at the top end opposite the bottom wall, said periphery wall having air/water flow portions, the tray having space defining portions for defining a space between the bottom of the at least one pot and an installation surface on which the raising seedling device is placed are provided between the tray and the installation surface.

The present invention is characterised in that the air/ water flow portions are formed by a plurality of slits in said periphery wall extending from the bottom wall of said pot towards said opening.

In the raising seedling device, the air/water flow portions may be formed by meshes or through holes or slits. Preferably, the width of the slits and the diameter of the meshes or through holes are set in the range of 1mm to 3mm. The space defining portions may be formed by legs being integrally projected vertically downwardly from a margin of the tray. Further, the space defining portions may be so formed as to be detachably engaged with or foldably attached to the tray. Further, the space defining portions may be formed by bearing shafts that are so formed as to be detachably and/or height-adjustably engaged with a base.

WO-A-96/03857 discloses a container for growing plants, which may be provided with slots in a portion of the sidewall. Also, the present invention provides a raising seedling method that a tray, which forms therein a pot having air/water flow portions, is placed with a space defined between a bottom of the pot and an installation surface by space defining portions and a seedling is raised in potting compost or soil filled in the pot, whereby an around-the-pot of roots of the seedling in the pot is prevented to raise the seedling having fine roots more than a main root and also the roots of the seedling are prevented from spreading out from the pot.

### BRIEF DESCRIPTION OF THE DRAWINGS

In the drawings:
FIG. 1 is a perspective view of an entirety of a raising seedling device of the present invention;
FIG. 2 is a plan view of a pot and a leg of the raising seedling device of the present invention;
FIG. 3 is a partially cutout perspective view of the pot and the leg of the raising seedling device of the present invention;
FIG. 4 is a perspective view of the used condition of the raising seedling device of the present invention;
FIG. 5 shows a seedling, when viewed obliquely from below, that was raised in the raising seedling device of the present invention;
FIG. 6 is a longitudinally sectioned end view showing the piled raising seedling devices of the present invention at upper ends thereof;
FIG. 7 is a corresponding view of FIG. 2, showing a modified bottom of the raising seedling device of the present invention;
FIG. 8 is a plan view of a modified pot portion of the raising seedling device of the present invention;
FIG. 9 is a longitudinal sectional view of the modified pot portion of the raising seedling device of the present invention;
FIG. 10 is a longitudinal sectional view of the used condition of a modified tray of the raising seedling device of the present invention;
FIG. 11 is a longitudinal sectional view of another modified tray of the raising seedling device of the present invention, illustrating the procedure of taking out seedlings;
FIG. 12 is a longitudinal sectional view of bearing shafts used for taking out the seedlings from the raising seedling device of the present invention;
FIG. 13 is a perspective view showing the used condition of modified legs of the raising seedling device of the present invention;
FIG. 14 is a perspective view showing the used condition of further modified legs of the raising seedling device of the present invention;
FIG. 15 is a perspective view showing the entirety of the raising seedling device according to the second embodiment of the present invention;
FIG. 16 is a longitudinally sectioned side view of a pot portion of the raising seedling device according to the second embodiment of the present invention; and
FIG. 17 is an enlarged longitudinal sectional view of a bottom of the pot portion of the raising seedling device according to the second embodiment of the present invention.
FIG. 18 is a perspective view showing a droop-preventing auxiliary leg of the raising seedling device of the present invention;
FIG. 19 is a longitudinal sectional view of the used condition of the droop-preventing auxiliary leg of the raising seedling device of the present invention.

### DETAILED DESCRIPTION OF THE EMBODIMENTS

Referring now to the accompanying drawings, examples of the preferred embodiments of the present invention directed to a raising seedling device and method will be described below. It is to be understood, however, that the scope of the invention is by no means limited to the illustrated embodiments.

### EMBODIMENT 1

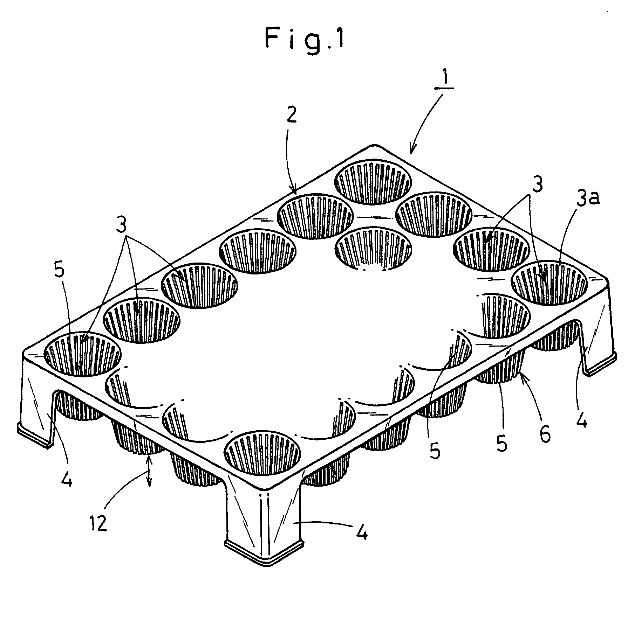

Referring to FIG. 1, there is shown an entirety of a raising seedling device. In FIG. 1, reference numeral 1 indicates the entirety of the raising seedling device. The raising seedling device 1 comprises a tray 2 and formed into a rectangular shape in plan configuration; a plurality of pots 3 formed in the tray 2; and legs 4 extending vertically downwardly from the tray 2 at four corners thereof.

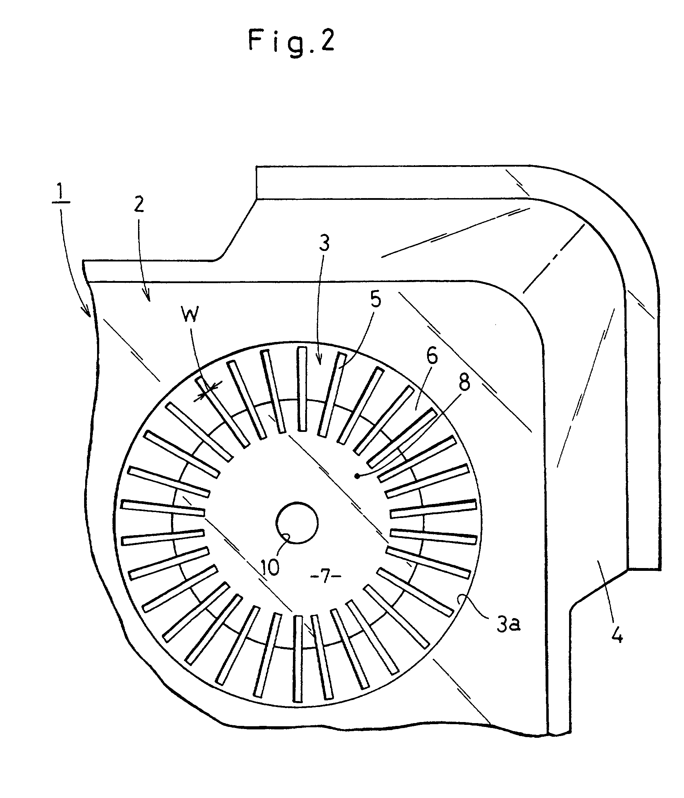

Each of the pots 3 is formed to increase in diameter toward a larger diameter opening 3a at the top, as shown in FIGS. 1 and 2, and has a tapered side wall 6 with slits (air/water flow portions) 5, a bottom 7 with the slits, and a raising seedling room 8 in the interior thereof.

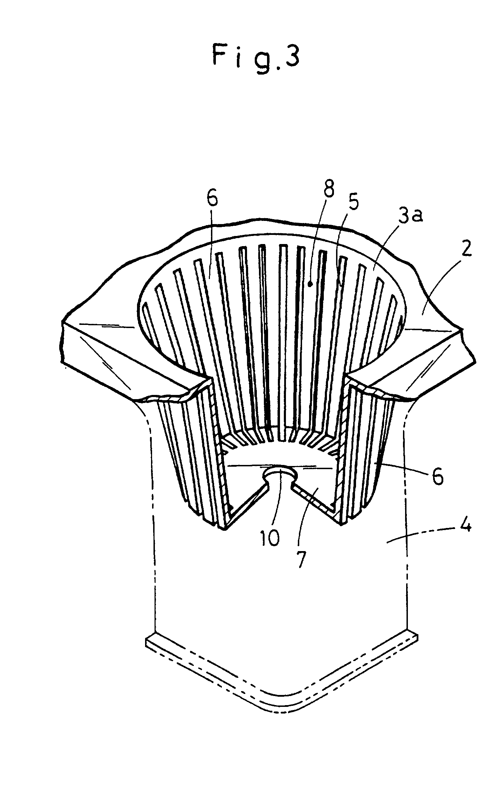

Formed in a center portion of the bottom 7 is a bearing shaft insertion hole 10 in which a bearing shaft 9 for taking out the plant (as mentioned later) is inserted, as shown in FIGS. 2 and 3.

The legs 4 are formed to extend outwardly and obliquely downwardly from the four corners of the tray 2. Each leg has such a length that a space 12 of about 2 to about 10cm can be defined between the bottom 7 of the pot 3 and the ground on which the raising seedling device 1 is placed. The space 12 serves as an air flow space.

The reason for the air flow space 12 to be limited to the range of 2-10cm is as follows. With the space of less than 2cm, substantially no air layer is found in the space 12 under the bottom of the pot 3, while on the other hand, with the space more than 10cm, the entire device becomes bulky and virtually undesirable.

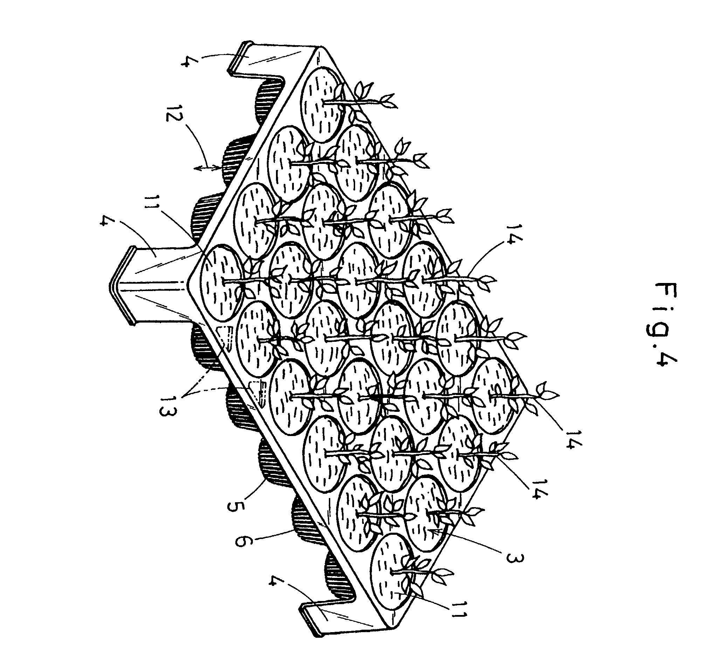

For improvement of air flowing through the air flow space 12, through holes 13 may be formed in a surface of the tray 2 at, for example, locations between the pots 3, as indicated by an imaginary line in FIG. 4.

The slits 5 are formed in the side wall 6 of the each pot 3 at regular intervals, extending from the opening 3a at the top or from in the vicinity of the same to a part of the bottom 7. The slits 5 are each formed to have such a width W (e.g. 1.5mm) as to prevent the potting compost or soil from leaking or escaping therefrom and an interval of 3mm between neighboring slits 5. The interval between the neighboring slits 5 may be in the range of 2mm to 15mm.

The width W of the each slit 5 can selectively be set within the range of 1mm to 3mm. The reason for the width to be limited to this specific range is as follows. With the width of less than 1mm, it is difficult to form such a narrow slit and also the slit is easily clogged or jammed so that the air/water flow is hindered. On the other hand, with the width of more than 3mm, it is easy for the potting compost or soil 11 to escape therefrom together with the watering.

Now, description will be given on how to use the thus constructed raising seedling device 1 from the raising of seedlings to the transplantation.

The tray and the at least one pot of the present invention are formed of a synthetic resin or biodegradable plastic.

The raising seedling device 1 is placed in a raising place, first, and then, the potting compost or soil 11 is filled in the raising seedling rooms 8 of the pots 3, as shown in FIG. 4. Then, seeds of seedlings are sowed in the compost or soil 11 or young plants of the seedlings are planted in the compost or soil, and then they are watered for the raising.

In the watering process, the air flow space 12 defined under the bottom 7 of the each pot 3 enables surplus water to be drained away from the slits 5 formed in the side wall 6 and a part of the bottom 7 as well as from the through hole in the bottom 7, so as to be prevented from being gathered in the pot 3 or from dew condensation.

As a result of the surplus water being drained away from the slits 5 formed in the side wall 6 and the part of the bottom 7, the compost or soil 11 filled in the each pot 3 is dried substantially equally. By virtue of this, the so-called "around-the-pot" of the main root resulting from the dew condensation of side wall 6 of the pot 3 is prevented and accordingly the feeding roots or fine roots are increased more than the main roots. Hence, the seedlings (plants) 14 that are excellent in taking root can be raised in the raising seedling device (See FIG. 4).

Further, the air flow space 12 defined under the bottom 7 of the each pot 3 enables the roots of the seedlings 14 to be prevented from extending downwardly from the bottom 7 of the pot 3.

After the seedlings 14 are grown to a predetermined size in the pots, as shown in FIG. 4, the seedlings 14 are carried to a desired place in the state of being potted in the pots 3 of the tray 2 and are transplanted.

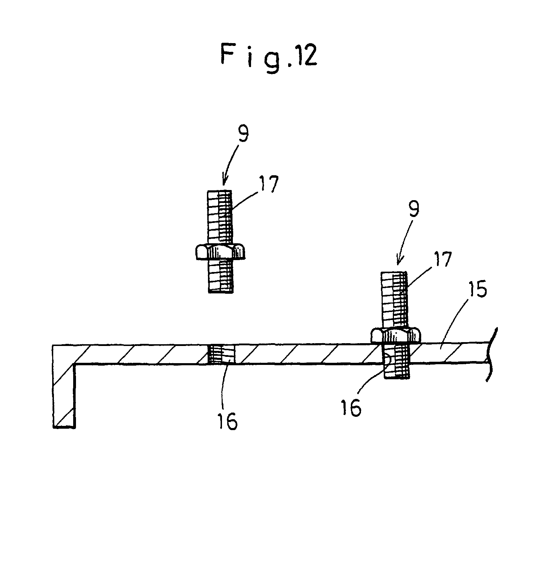

After the seedlings are carried to the desired place, the bearing shafts 9 are inserted in the bearing shaft insertion holes 10 formed in the centers of the bottoms 7 of the pots 3, as shown in FIG. 11, to thrust up root portions 15 of the seedlings 14 raised in the pots 3, so as to be taken out from the pots.

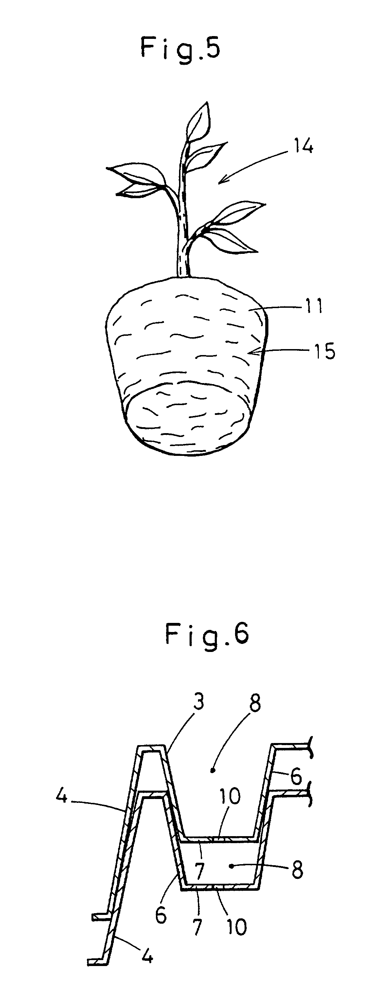

When the seedlings 14 are taken out from the pots 3, part of the roots is exposed from the surrounding compost or soil 11, as shown in FIG. 5. When the seedlings 14 are transplanted in the desired place in this state, their roots opening to the surroundings can extend without any stress and thus the good taking root is yielded after the transplantation. Thus, the roots can extend deep into the ground and the seedlings 14 grow with vigor.

In this connection, no "around-the-pot" of the main roots was found in the plants raised in the raising seedling device 1 of the invention and also the feeding roots or fine roots of the plants raised in the raising seedling device of the invention were found to extend more than the main roots by 3-4 times as much as in the conventional type of poly-pots, from which it was confirmed that the good taking root was yielded.

The used raising seedling devices 1, from which the seedlings 14 were taken out, can be piled vertically one after another, for storage purposes, as shown in FIG. 6.

The legs 4 are formed to extend from the tray 2, and as such can allow a plurality of trays to be piled with stability and without being bulky.

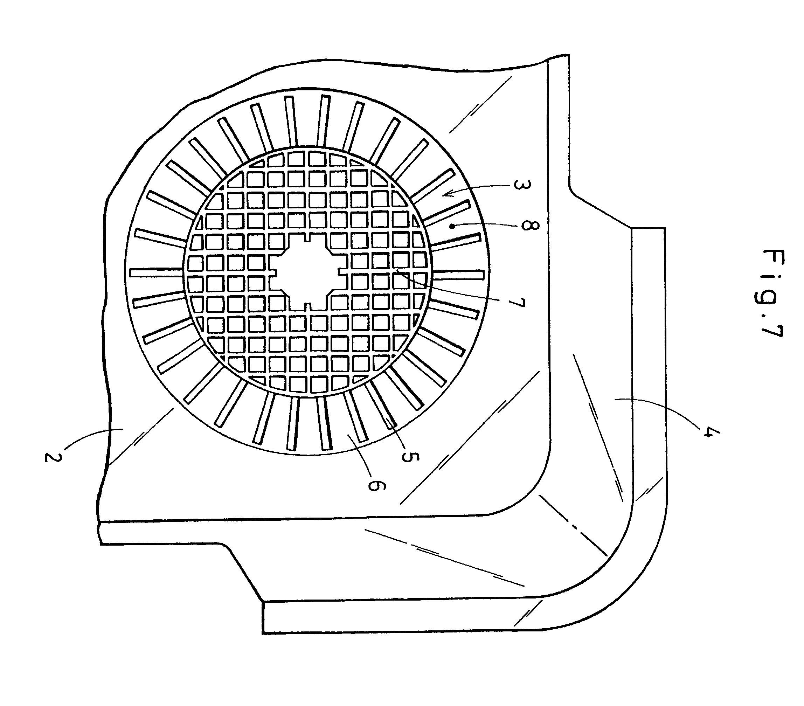

While the slits 5 are formed to extend from the side wall 6 of the pot 3 to the part of the bottom 7 in the above-illustrated embodiment, either meshes of a grid-like form (FIG. 7) or through holes may be formed in the bottom 7 as alternatives to the slits.

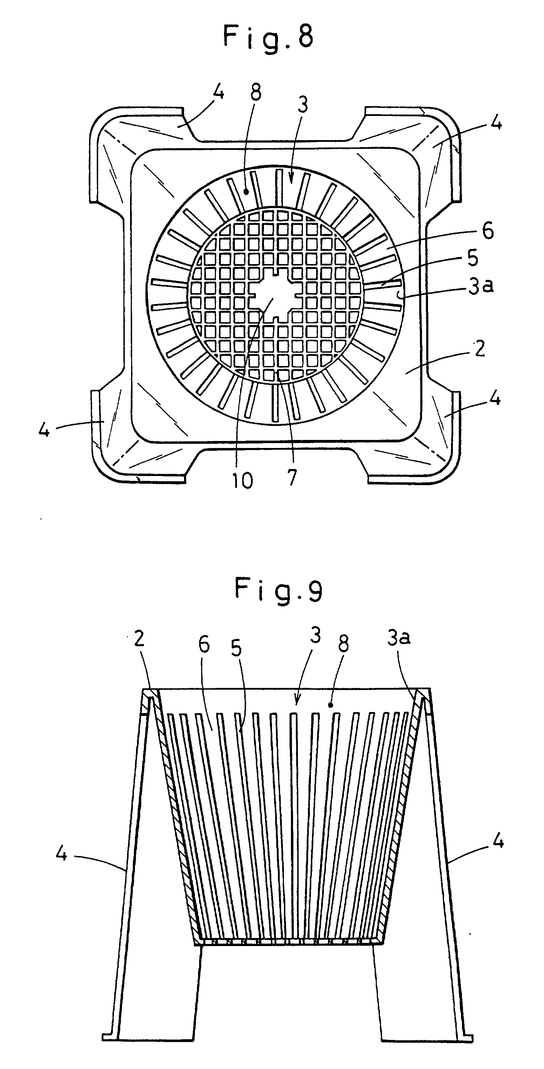

While a plurality of pots 3 are formed in the four-legged tray 2 in the above-illustrated embodiment, a single independent pot 3 may be formed to have four legs 4, as shown in FIGS. 8 and 9. Such a single, four-legged, pot is suitably used for raising a relatively large seedling, for example.

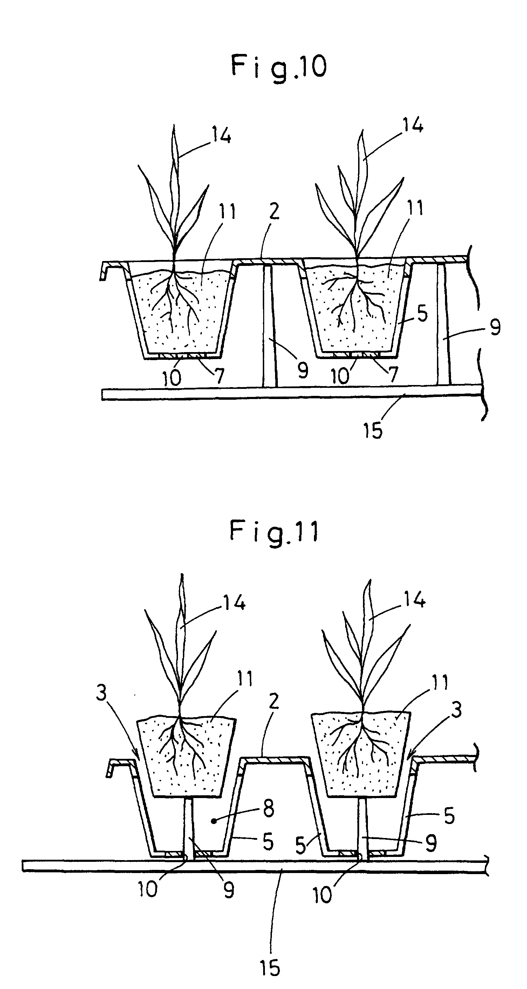

Further, while the above-illustrated embodiment is structured so that the space 12 can be defined by the legs 4, it may be modified as shown in FIGS. 10 and 11. In this modification, the bearing shafts 9 are projected vertically from a base 15 so that they can bear a bottom surface of the tray 2 to define the air flow space 12 under the pots 3 during the raising of the seedlings and also can be inserted in the bearing shaft insertion holes 10 to push up the seedlings 14 when the seedlings are taken out from the pots 3.

Further, the each bearing shaft 9 is not necessarily formed to be integral with the base 15, but may be formed by an internal thread 16 formed in the base 15 and a stud bolt 17 threadedly engageable with the internal thread 16, as shown in FIG. 12. This variant of the bearing shaft 9 can provide the advantage that the bearing shaft 9 can be varied in height and also can selectively be placed in required locations only.

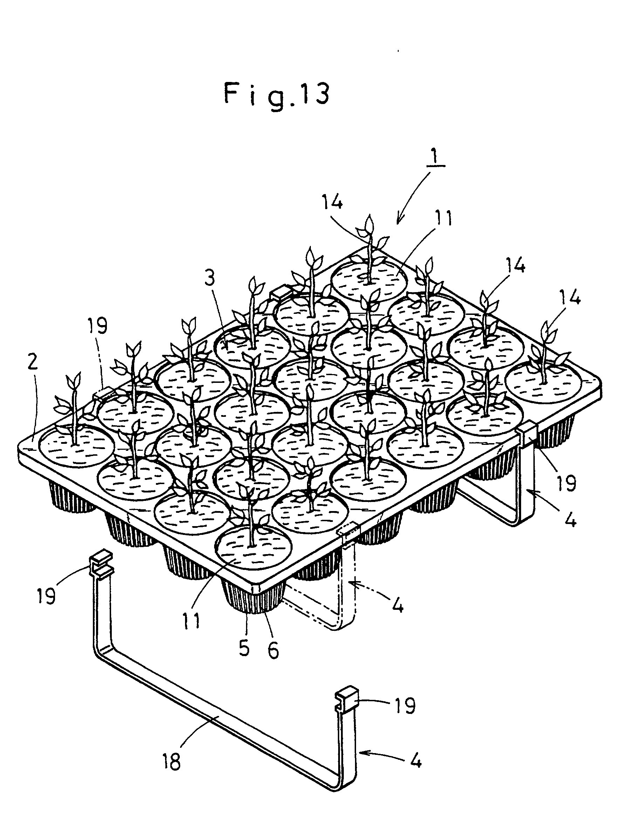

While the legs 4 are integrally projected vertically downwardly from the four corners of the tray 2 in the above-illustrated embodiment, the present invention is not limited to such an arrangement. For example, as shown in FIG. 13, the legs 4 may be formed by U-shaped leg members 18 each having, at its both tip ends (at the top ends), fitting portions 19 to fit to the side edges of the tray 2.

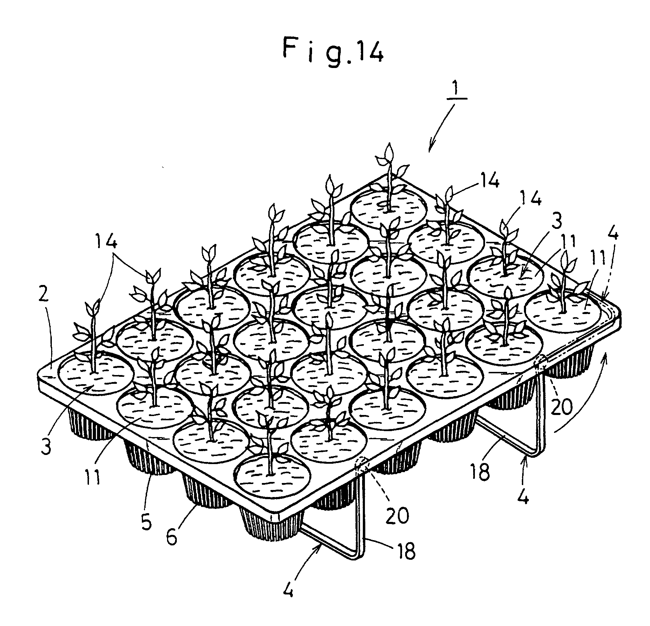

Further, as shown in FIG. 14, the fitting portions 19 of the legs 4 of FIG. 13 may be substituted by pivot portions 20 about which the leg members 18 can be pivoted to be foldable.

### EMBODIMENT 2

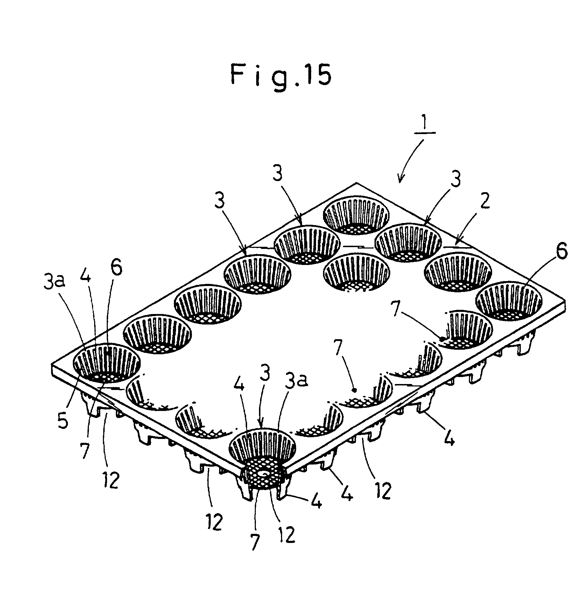

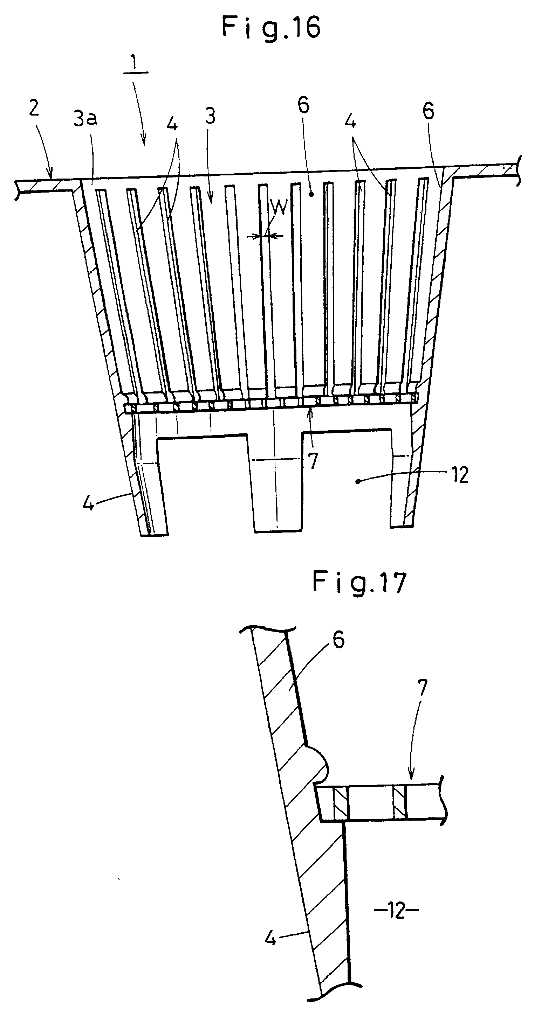

As shown in FIGS. 15-17, this embodiment is different from the above-illustrated embodiment in that the legs 4 are integrally projected downwardly from the bottom of each of the pots 3 to define the space 12 under the bottom, instead of the legs 4 being projected vertically downwardly from the four corners of the tray 2; and that a perforated bottom plate of a grid-like form forms the bottom 7 of the pot 3 and is placed at a vertical position in the tapered side wall 6. The other structures and functions of this embodiment are identical to those of the above-illustrated embodiment.

### EMBODIMENT 3

While the seedlings are raised in the pots 3 of the tray 2, the tray 2, formed of synthetic resin or biodegradable plastic, droops at a center portion thereof due to its own weight and weight of potting compost or soil filled in the respective pots 3, so that the pots 3 at the center portion of the tray 2 in particular droop and come near to or come into contact with the installation surface.

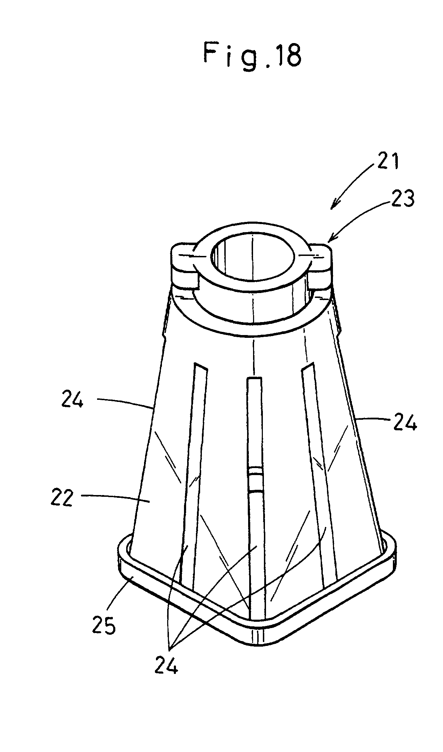

In this embodiment, in order to prevent the droop of the pots 3, an auxiliary leg for preventing the drooping of the pot is provided in the space defining portion. As shown in FIG. 18, the droop-preventing auxiliary leg 21 comprises an auxiliary leg body 22 having a hollow, truncated cone-like form that gradually expands from the top end toward the bottom end, a fitting portion 23, a plurality of air flow slits 24 and a flange 25 formed of synthetic resin. The fitting portion 23, the slits 24 and the flange 25 are formed to be integral with the auxiliary leg body 22.

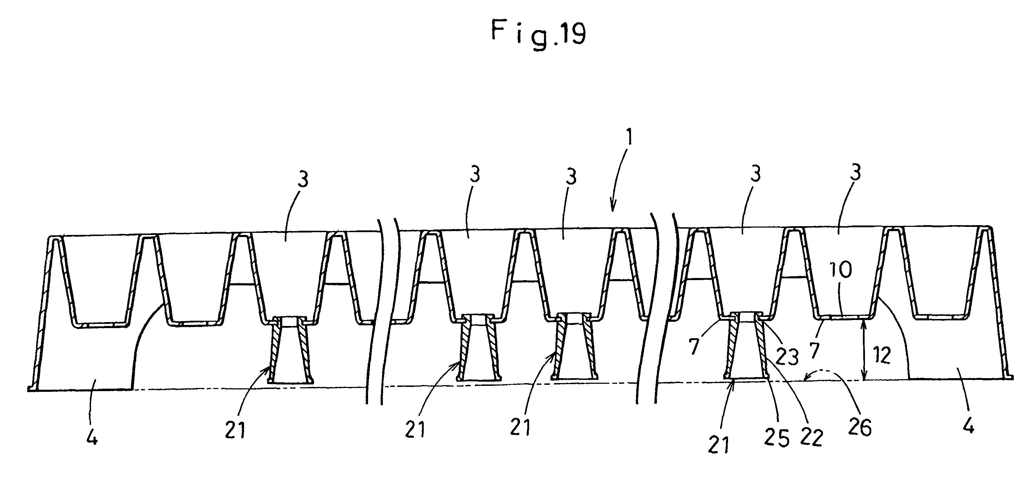

In use, the fitting portion 23 of the auxiliary leg 21 is detachably inserted in the hole 10 at the bottom 7 of any selected pot 3 in the tray 2 (See FIG. 19).

The fitting of the auxiliary legs 21 to the pots 3 of the tray 2 can provide the result that when the tray 2 deflects and droops at a center portion thereof to some extent due to deterioration with age and weight of potting compost or soil filled in the pots 3, the flanges 25 of the auxiliary legs 21 come into contact with the installation surface 26 to prevent further droop of the pots 3.

Thus, the space 12 between each pot 3 of the tray 2 and the installation surface 26 can always be kept so that it can be well ventilated by the auxiliary legs 21 and the air flow slits 24 formed therein, to present good condition for growth and development of the seedlings.

### EFFECTS OF THE INVENTION

As mentioned above, a raising seedling device of the present invention is constructed so that a pot having air/water flow portions formed in its periphery wall and/or its bottom wall portion is formed in a tray and also the tray is provided with space defining portions so that a space between a bottom of the pot and an installation surface on which the raising seedling device is placed can be defined by the space defining portions. With this construction, the seedlings can be transplanted in a short time and in an easy and simple way with little trouble with taking out the seedlings from the small pots or the poly-pots as in the prior art. Also, the trouble of collecting or recovering the used poly-pots from which the seedlings are taken out can be saved, differently from the prior art. In addition, various problems involved in the treatment of the used poly-pots as industrial wastes, such as labors and costs for the transportation and incineration thereof and generation of an environmental pollution from dioxins produced during the incineration can be avoided.

When the seedling is raised in the raising seedling device of the invention, dew condensation in the pot can be prevented by the spaces formed in the periphery of the pot. This can provide the advantage that the around-the-pot of the roots caused by the dew condensation in the pot can be prevented to raise the seedling having fine roots more than a main root and excellent in taking roots.

Further, the roots of the seedling as taken out from the pot in the transplantation open to the surroundings, so that they can well develope in the ground after the transplantation.

In addition, according to the present invention, since the legs are formed on the tray, the raising seedling device is simplified in structure, as compared with the previously proposed one which is so structured that the legs are formed to extend from a marginal portion around the periphery of the bottom of each of the pots. Thus, the mold for forming it can be reduced in cost and thus manufacturing costs can also be reduced.

Further, according to the present invention, the legs are projected vertically downwardly from the tray and no legs are provided in the bottom of the pot, differently from the previously proposed one. Thus, when the trays are piled for the transportation or storage, they are prevented from being bulky, thus providing the advantages of providing increased storage efficiency and of preventing increase in transport costs.

## Claims

1. A raising seedling device comprising a tray (2) and at least one pot (3), formed in the tray, for filling compost or soil in it, the at least one pot including a periphery wall (6) having a bottom wall (7) at one end and an opening (3a) at the top end opposite the bottom wall (7), said periphery wall (6) having air/water flow portions (5), the tray having space defining portions (4) for defining a space (12) between the bottom of the at least one pot (3) and an installation surface on which the raising seedling device is placed are provided between the tray and the installation surface, **characterised in that** the air/water flow portions (5) are formed by a plurality of slits in said periphery wall extending from the bottom wall (7) of said pot towards said opening (3a).

2. The raising seedling device according to claim 1, wherein the at least one pot (3) has air/water flow portions formed in its bottom wall portion (7).

3. The raising seedling device according to claim 1 or 2, wherein said slits (5) have a width between 1 and 3mm.

4. The raising seedling device according to claim 1, 2 or 3, wherein at least a part of the air/water portion is formed by meshes.

5. The raising seedling device according to any one preceding claim, wherein the tray and the at least one pot (3) are formed of a synthetic resin.

6. The raising seedling device according to any one of claims 1 to 4, wherein the tray and the at least one pot (3) are formed o a biodegradable plastic.

7. The raising seedling device according to any one preceding claim, wherein the space defining portions (4) are formed by legs integrally projected vertically downwardly from a marginal portion around a periphery of the tray (2) in which the at least one pot (3) is formed.

8. The raising seedling device according to any one of claims 1 to 6, wherein the space defining portions (4) are so formed as to be detachably engaged with or foldably attached to the tray (2).

9. The raising seedling device according to any one of claims 1 to 6, wherein the space defining portions are formed by bearing shafts (9) contactable with a bottom surface of the tray (2).

10. The raising seedling device according to claim 9, wherein the bearing shafts (9) are so formed as to be detachably and/or height-adjustably engaged with a base (13).

11. A raising seedling device according to any one preceding claim, which includes an auxiliary leg (21), provided in the space defining portion, for preventing drooping of the bottom of the pot (3).

## Patentansprüche

1. Vorrichtung zum Aufziehen von Sämlingen, umfassend ein Trägertablett (2) und wenigstens einen Topf (3), der in dem Trägertablett ausgebildet ist, um Kompost oder Erde in diesen zu füllen, wobei der wenigstens eine Topf eine begrenzende Wand (6) umfasst mit einer Bodenwand (7) an einem Ende und einer Öffnung (3a) an dem oberen Ende gegenüber der Bodenwand (7), wobei die genannte begrenzende Wand (6) Luft/Wasserflussbereiche (5) besitzt, das Trägertablett Zwischenraum bestimmende Bereiche (4) besitzt, die zwischen dem Trägertablett und einer Oberfläche einer Installation angeordnet sind, auf der die Vorrichtung zum Aufziehen von Sämlingen platziert wird, um einen Zwischenraum (12) zu bestimmen zwischen dem Boden des wenigstens einen Topfes (3) und der Oberfläche der Installation, **dadurch gekennzeichnet, dass** die Luft/Wasserflussbereiche (5) durch eine Vielzahl von Schlitzen in der genannten begrenzenden Wand gebildet werden, die sich von der Bodenwand (7) des genannten Topfes in Richtung der genannten Öffnung (3a) erstrecken.

2. Vorrichtung zum Aufziehen von Sämlingen nach Anspruch 1, wobei der wenigstens eine Topf (3) Luft/Wasserflussbereiche besitzt, die in seinem Bodenwandbereich (7) ausgebildet sind.

3. Vorrichtung zum Aufziehen von Sämlingen nach Anspruch 1 oder 2, wobei die genannten Schlitze (5) eine Breite zwischen 1 und 3 mm besitzen.

4. Vorrichtung zum Aufziehen von Sämlingen nach Anspruch 1, 2 oder 3, wobei wenigstens ein Teil des Luft/Wasserbereiches durch Maschen gebildet wird.

5. Vorrichtung zum Aufziehen von Sämlingen nach einem der vorangehenden Ansprüche, wobei das Trägertablett und der wenigstens eine Topf (3) aus einem synthetischen Harz gebildet werden.

6. Vorrichtung zum Aufziehen von Sämlingen nach einem der Ansprüche 1 bis 4, wobei das Trägertablett und der wenigstens eine Topf (3) aus einem biologisch abbaubaren Kunststoff gebildet werden.

7. Vorrichtung zum Aufziehen von Sämlingen nach einem der vorangehenden Ansprüche, wobei die Zwischenraum bestimmenden Bereiche (4) durch Füße gebildet werden, die fest verbunden senkrecht nach unten von einem Randbereich um den Umfang des Trägertabletts (2) herausragen, in dem der wenigstens eine Topf (3) ausgebildet ist.

8. Vorrichtung zum Aufziehen von Sämlingen nach einem der Ansprüche 1 bis 6, wobei die Zwischenraum bestimmenden Bereiche (4) so ausgebildet sind, um abnehmbar verbunden mit dem oder faltbar angebracht an das Trägertablett (2) zu werden.

9. Vorrichtung zum Aufziehen von Sämlingen nach einem der Ansprüche 1 bis 6, wobei die Zwischenraum bestimmenden Bereiche durch Trägerschäfte (9) gebildet werden, die mit einer Bodenoberfläche des Trägertabletts (2) kontaktierbar sind.

10. Vorrichtung zum Aufziehen von Sämlingen nach Anspruch 9, wobei die Trägerschäfte (9) so gebildet sind, dass sie entfembar und/oder höheneinstellbar mit einer Basis (13) verbunden werden.

11. Vorrichtung zum Aufziehen von Sämlingen nach einem der vorangehenden Ansprüche, die ein Hilfsbein (21) einschließt, das in dem Zwischenraum bestimmenden Bereich angebracht wird, um das Absenken des Bodens des Topfes (3) zu verhindern.

## Revendications

1. Dispositif de culture de semis comprenant un plateau (2) et au moins un pot (3) formé dans le plateau pour son remplissage de compost ou de terre, le pot au nombre minimum d'un comprenant une paroi de périphérie (6) possédant une paroi de fond (7) à une extrémité et une ouverture (3a) à l'extrémité supérieure opposée à la paroi de fond (7), ladite paroi de périphérie (6) possédant des parties de passage d'air/eau (5), le plateau possédant des parties de définition d'espace (4) pour définir un espace (12) entre le fond du pot (3) au nombre minimum d'un et une surface d'installation sur laquelle est placé le dispositif de culture de semis, prévues entre le plateau et la surface d'installation, **caractérisé en ce que** les parties de passage d'air/eau (5) sont formées d'une pluralité de fentes dans ladite paroi de périphérie s'étendant à partir de la paroi de fond (7) dudit pot vers ladite ouverture (3a).

2. Dispositif de culture de semis selon la revendication 1, dans lequel le pot (3) au nombre minimum d'un possède des parties de passage d'air/eau formées dans sa partie de paroi de fond (7).

3. Dispositif de culture de semis selon la revendication 1 ou 2, dans lequel lesdites fentes (5) possèdent une largeur comprise entre 1 et 3 mm.

4. Dispositif de culture de semis selon la revendication 1, 2 ou 3, dans lequel au moins une partie de la partie d'air/eau est formée d'un maillage.

5. Dispositif de culture de semis selon l'une quelconque des revendications précédentes, dans lequel le plateau et le pot (3) au nombre minimum d'un sont formés d'une résine synthétique,

6. Dispositif de culture de semis selon l'une quelconque des revendications 1 à 4, dans lequel le plateau et le pot (3) au nombre minimum d'un sont formés d'une matière plastique biodégradable.

7. Dispositif de culture de semis selon l'une quelconque des revendications précédentes, dans lequel les parties définissant un espace (4) sont formées de jambes se projetant, de façon intégrale, à la verticale vers le bas à partir d'une partie de bord autour d'une périphérie du plateau (2) sur laquelle est formé le pot (3) au nombre minimum d'un.

8. Dispositif de culture de semis selon l'une quelconque des revendications 1 à 6, dans lequel les parties définissant un espace (4) sont formées de façon à pouvoir être engagées, de façon amovible, ou être fixées par repliement sur le plateau (2).

9. Dispositif de culture de semis selon l'une Quelconque des revendications 1 à 6, dans lequel les parties définissant un espace sont formées par des tiges de support (9) pouvant entrer en contact avec une surface de fond du plateau (2).

10. Dispositif de culture de semis selon la revendication 9, dans lequel les tiges de support (9) sont formées de façon à pouvoir être engagées, de façon amovible et/ou réglable en hauteur, avec une base (13).

11. Dispositif de culture de semis selon l'une quelconque des revendications précédentes, comprenant un pied auxiliaire (21) prévu dans la partie définissant un espace pour empêcher un gouttage du fond du pot (3).
